# FASCICULE DE BREVET EUROPEEN

(11) **EP 2 832 639 B1**
(45) Date de publication et mention de la délivrance du brevet: **02.05.2018**
(21) Numéro de dépôt: 14179200.2
(22) Date de dépôt: 30.07.2014
(51) Int. Cl.: B64C 25/40

(54) **Atterrisseur d'aéronef muni d'un organe d'entraînement des roues**
Fahrwerk eines Luftfahrzeugs mit einem Antriebsorgan für die Räder
Aircraft landing gear provided with a drive wheel unit

(30) Priorité: 02.08.2013 FR 1357750
(43) Date de publication de la demande: 04.02.2015
(73) Titulaire: Safran Landing Systems, 78140 Vélizy-Villacoublay (FR)
(72) Inventeur: Blanpain, Thierry, 78140 VELIZY-VILLACOUBLAY (FR); Campbell, Edouard, 78140 VELIZY-VILLACOUBLAY (FR); Simonneaux, Yann, 78140 VELIZY-VILLACOPUBLAY (FR); Monseu, Martial, 78140 VELIZY-VILLACOUBLAY (FR); Finet, Rémi, 78140 VELIZY-VILLACOUBLAY (FR)
(74) Mandataire: Parzy, Benjamin Alain

(56) Documents cités:
- FR-A1- 2 954 234
- FR-A1- 2 954 752
- US-A- 3 850 389

## Description

### ARRIERE-PLAN TECHNOLOGIQUE DE L'INVENTION

On connaît des atterrisseurs munis d'organes d'entraînement des roues, décrits par exemple dans la demande FR 2 954 752. L'organe d'entraînement d'une roue de l'atterrisseur est porté par une couronne qui reçoit les pistons du frein équipant la roue. US 3 850 389 divulgue un atterrisseur d'aéronef selon le préambule de la revendication 1. Lorsque l'aéronef est au sol, l'atterrisseur se déforme. En particulier, l'essieu portant la roue fléchit de façon non négligeable. Il importe donc de pouvoir tenir compte de cette déformation, qui peut conduire à un déplacement de l'organe d'entraînement par rapport à la roue.

### OBJET DE L'INVENTION

L'invention a pour objet de proposer un nouveau montage de l'organe d'entraînement permettant d'absorber le fléchissement de l'essieu portant la roue.

### RESUME DE L'INVENTION

En vue de la réalisation de ce but, on propose un atterrisseur d'aéronef selon la revendication 1, l'atterrisseur comportant un essieu qui porte au moins une roue, et étant équipé d'un organe d'entraînement de la roue en rotation. Selon l'invention, l'organe d'entraînement est fixé de façon rigide sur l'essieu, tandis qu'un support déformable est disposé entre une partie en porte-à-faux de l'organe d'entraînement et une portion de l'atterrisseur distincte de l'essieu.

Ainsi, l'organe d'entraînement est fixé au plus près de la roue sur l'essieu même, de sorte que l'organe d'entraînement suit naturellement les déformations de l'essieu, ce qui minimise les déplacements entre la roue et l'organe d'entraînement. Sa partie en porte-à-faux, essentiellement le moteur de l'organe, est alors supporté par le support déformable, qui est relié à une partie rigide de l'atterrisseur, évitant ainsi des vibrations excessives.

### BREVE PRESENTATION DES FIGURES

L'invention sera mieux comprise à la lumière de la description qui suit d'un atterrisseur selon un mode particulier de réalisation de l'invention, en référence aux figures des dessins annexés parmi lesquelles :
- La figure 1 est une vue schématique de face d'un atterrisseur muni d'un organe d'entraînement de roue ;
- La figure 2 est une vue du même atterrisseur sur lequel le fléchissement de l'essieu a été exagéré ;
- La figure 3 est une vue de côté de l'atterrisseur des figures 1 et 2, l'une des roues ayant été omise ;
- La figure 4 est une vue schématique en coupe d'un exemple de support déformable selon l'invention ;
- La figure 5 est une vue en perspective d'un atterrisseur équipé d'un bâti apte à recevoir le support déformable, selon un mode de réalisation de l'invention ;
- La figure 6 est une vue en perspective de l'atterrisseur de la figure 5, l'un des actionneurs d'entraînement étant monté sur l'atterrisseur.

### DESCRIPTION D'UN MODE PARTICULIER DE REALISATION DE L'INVENTION

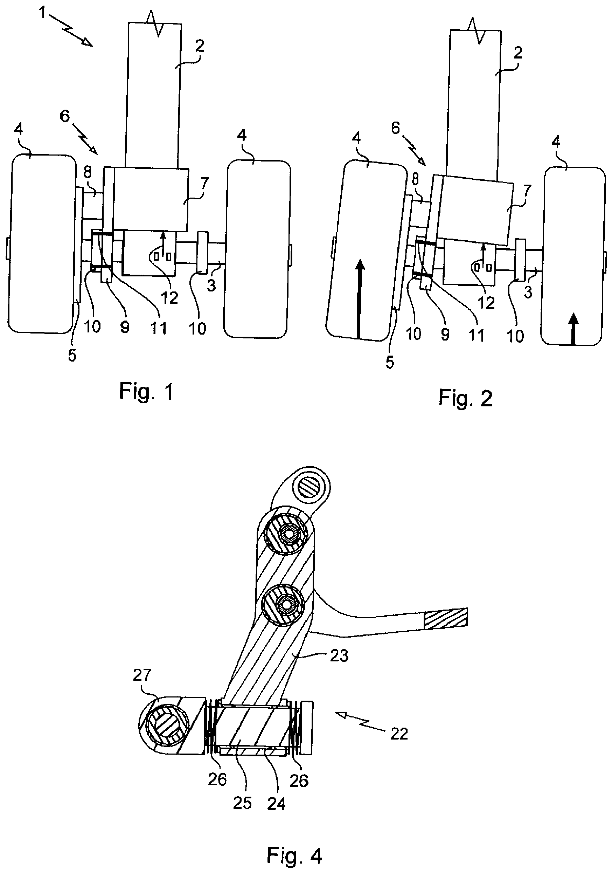

L'atterrisseur des figures 1 à 2 comporte un atterrisseur 1 comportant un caisson solidaire d'un aéronef, dans lequel coulisse une tige coulissante 2 qui porte à son extrémité inférieure un essieu 3. L'essieu 3 porte ici deux roues 4. Comme cela a été illustré sur la figure 2 de façon exagérée sur l'une des roues, l'essieu est susceptible de fléchir vers le haut sous l'effet des efforts au sol subis par l'atterrisseur 1, ce qui a pour effet d'incliner la roue correspondante. L'effet n'est pas négligeable et peut atteindre une inclinaison d'un degré.

L'une des roues est ici illustrée équipée d'une couronne d'entraînement 5 qui coopère avec un organe d'entraînement en rotation de la roue, en l'occurrence ici un actionneur d'entraînement 6. A cet effet, l'actionneur 6 comporte un corps 7 renfermant un moteur électrique associé à un réducteur pour entraîner un pignon de sortie 8 qui coopère avec la couronne d'entraînement 5 pour entraîner la roue 4 correspondante en rotation.

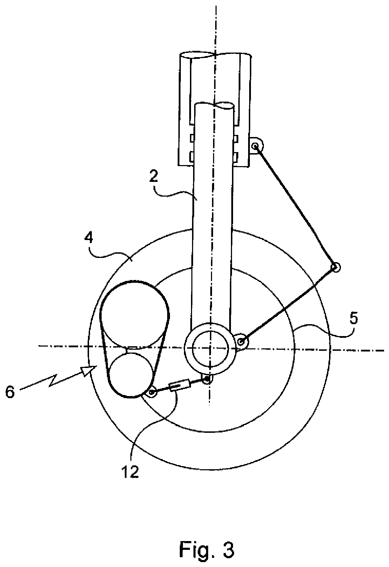

Ici, l'essieu 3 comporte des mains 10 servant chacune à la fixation d'un frein (non représenté ici). Selon l'invention, l'actionneur 6 comporte un flasque 9 qui est adapté à être fixé directement sur la main 10 de l'essieu, par exemple par l'intermédiaire de boulons 11. De la sorte, l'actionneur suit le fléchissement de l'essieu, ce qui minimise le déplacement relatif du pignon de sortie 8 par rapport à la couronne d'entraînement 5. Par ailleurs, un support déformable 12 est disposé entre la partie du corps 7 de l'actionneur en porte-à-faux et la tige 2 coulissante de l'atterrisseur 1, pour supporter l'actionneur et éviter les effets indésirables d'une masse importante en porte-à-faux. Ce support déformable 12 tend à reprendre une partie du poids de l'actionneur, et sert également à amortir d'éventuelles vibrations de la partie de l'actionneur en porte-à-faux. Sur les figures 1 et 2, le support déformable 12 est symbolisé schématiquement par une flèche, et sur la figure 3, sous la forme d'une butée déformable à capacité d'amortissement.

Les supports déformables peuvent prendre une variété de formes. Le support déformable 22 de la figure 4 comprend un bras 23 qui vient se fixer de manière rigide sur la tige coulissante 2. A l'extrémité inférieure du bras 23 s'étend un alésage 24 recevant un coulisseau 25 qui coulisse librement dans l'alésage à l'encontre de ressorts de rappel 26 rappelant le coulisseau 25 vers une position intermédiaire telle qu'illustrée. L'une des extrémités du coulisseau 25 porte un oeil 27 de solidarisation à la partie en porte-à-faux de l'actionneur d'entraînement en rotation 6.

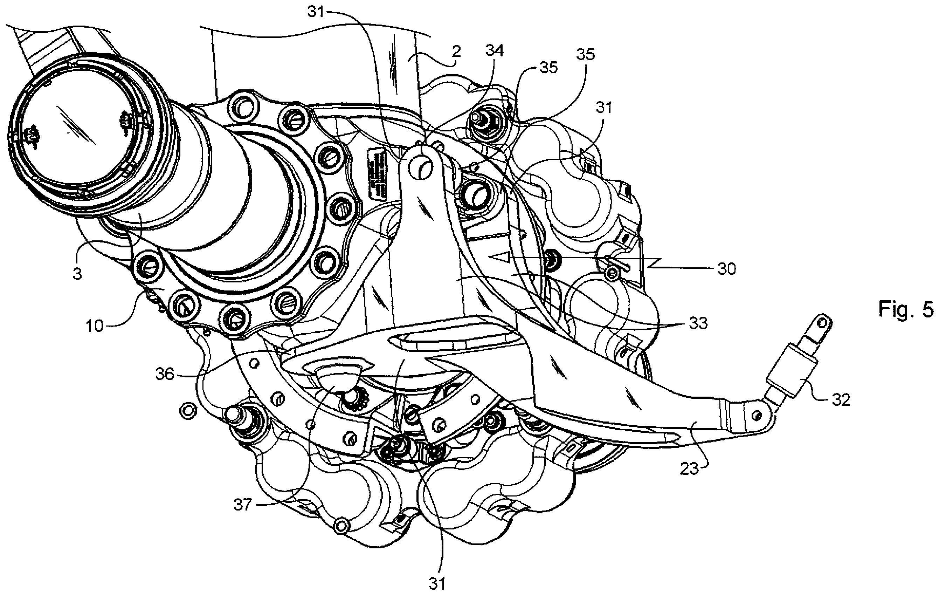

Sur le mode de réalisation de la figure 5, le bras 23 fait partie d'un bâti 30 comportant une platine 31 qui s'étend sous l'atterrisseur et de laquelle le bras 23 s'étend en saillie pour porter à son extrémité un amortisseur 32 formant le support déformable proprement dit. De la platine 31 s'étendent deux oreilles 33 terminées par des chapes 34 permettant de brocher le bâti 30 sur des chapes 35 de la tige coulissante de l'atterrisseur (la broche n'est pas représentée ici). Par ailleurs, la platine 31 se termine par un oeillet 36 venant entourer une boule de levage 37 disposée à l'extrémité inférieure de la tige coulissante 2 de l'atterrisseur. Le bâti 30 est ainsi rigidement fixé à la tige coulissante.

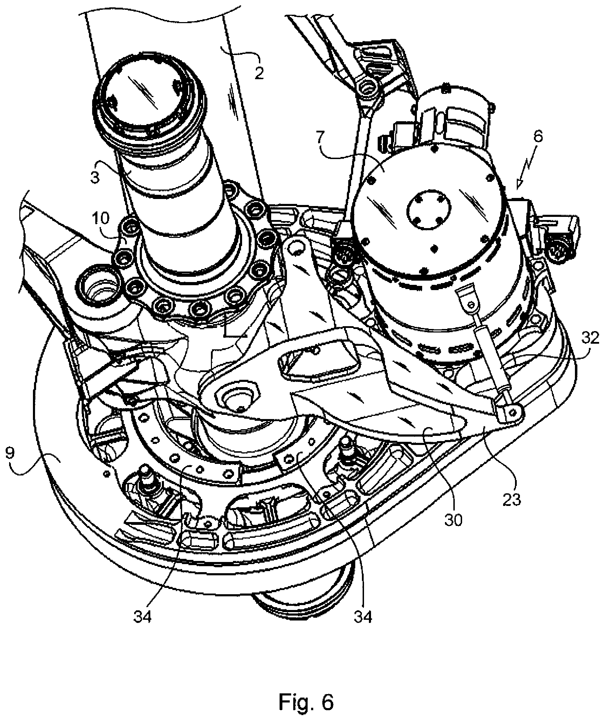

On voit sur la figure 6 la façon dont l'amortisseur 32 s'étend entre l'extrémité du bras 23 et le moteur 7 de l'actionneur 6 pour constituer un support déformable, le support fixe étant ici constitué par des cornières 34 qui sont fixées sur la main d'essieu 10 (qui est cachée ici, mais qui est similaire à celle que l'on voit de l'autre côté de l'essieu) et sur lesquelles le flasque 9 de l'actionneur 6 est rapporté.

L'invention n'est pas limitée à ce qui vient d'être décrit, mais englobe au contraire toute variante entrant dans le cadre défini par les revendications. En particulier, bien que l'on ait indiqué ici que l'organe d'entraînement en rotation était fixé sur une main de l'essieu, il pourra être fixé de toute autre façon à l'essieu. Il peut par exemple comporter un corps avec un orifice dans lequel une partie non cylindrique de l'essieu est engagée, ce qui assure son blocage en rotation. Il peut également être fixé à une broche traversant l'essieu.

## Revendications

1. Atterrisseur d'aéronef comportant un essieu (3) qui porte au moins une roue (4), l'atterrisseur étant équipé d'un organe d'entraînement (6) de la roue en rotation, l'organe d'entraînement étant fixé de façon rigide sur l'essieu, tandis qu'un support déformable (12 ;22) s'étend entre une partie en porte-à-faux de l'organe d'entraînement et une portion de l'atterrisseur distincte de l'essieu pour soutenir la partie en porte-à-faux de l'organe d'entraînement, le support déformable (12 ; 22) comprenant un bras (23) relié de manière rigide à une tige (2) de l'atterrisseur portant l'essieu (3), **caractérisé en ce que** le bras (23) fait partie d'un bâti (30) comportant une platine (31) qui s'étend sous l'essieu (3) de l'atterrisseur et de laquelle le bras (23) s'étend en saillie pour porter à son extrémité un amortisseur (32).

2. Atterrisseur selon la revendication 1, dans lequel l'actionneur d'entraînement est fixé à une main (10) de l'essieu qui sert par ailleurs à la fixation d'un frein de la roue.

3. Atterrisseur selon la revendication 1 ou 2, dans lequel le bras (23) reçoit un coulisseau (25) monté coulissant sur le bras en étant rappelé vers une position intermédiaire, le coulisseau comportant des moyens de sa solidarisation (27) à la partie en porte à faux de l'organe d'entraînement (6).

## Patentansprüche

1. Luftfahrzeugfahrwerk, umfassend eine Radachse (3), die mindestens ein Rad (4) trägt, wobei das Fahrwerk mit einem Antriebsorgan (6) zum Antrieb des Rades in Drehung ausgestattet ist, wobei das Antriebsorgan auf starre Weise an der Radachse befestigt ist, während sich ein verformbarer Träger (12; 22) zwischen einem auskragenden Abschnitt des Antriebsorgans und einem von der Radachse verschiedenen Abschnitt des Fahrwerks erstreckt, um den auskragenden Abschnitt des Antriebsorgans zu stützen, wobei der verformbare Träger (12; 22) einen Arm (23) umfasst, der auf starre Weise mit einer Stange (2) des Fahrwerks verbunden ist, die die Radachse (3) trägt, **dadurch gekennzeichnet, dass** der Arm (23) Teil eines Gestells (30) ist, das eine Platte (31) umfasst, die sich unter der Radachse (3) des Fahrwerks erstreckt und von der der Arm (23) absteht, um an seinem Ende einen Dämpfer (32) zu tragen.

2. Fahrwerk nach Anspruch 1, bei dem der Antriebsaktor an einem Bock (10) der Radachse befestigt ist, der ferner zur Befestigung einer Bremse des Rades dient.

3. Fahrwerk nach Anspruch 1 oder 2, bei dem der Arm (23) einen Schieber (25) aufnimmt, der auf dem Arm verschiebbar gelagert und dabei in eine Zwischenposition rückgestellt ist, wobei der Schieber Mittel für seine Befestigung (27) an dem auskragenden Abschnitt des Antriebsorgans (6) umfasst.

## Claims

1. Aircraft undercarriage leg including an axle (3) that bears at least one wheel (4), the undercarriage leg being equipped with a drive unit (6) for driving rotation of the wheel the drive unit being rigidly fixed to the axle and a deformable support (12; 22) extends between a cantilevered portion of the drive unit and a portion of the undercarriage leg not including the axle to support the cantilevered portion of the drive unit, the deformable support (12;22) including an arm (23) rigidly connected to a rod of the undercarriage leg bearing the axle, **characterized in that** the arm belong to a frame comprising a plate that extends under the axle of the undercarriage and from which the arm extends to carry a damper at its end.

2. Undercarriage leg according to Claim 1, wherein the drive actuator is fixed to an axle flange (10) that is also used to fix a brake of the wheel.

3. Undercarriage leg according to Claim 1 or 2, wherein the arm receives a slider (25) mounted to slide on the arm and urged toward an intermediate position, the slider including means (27) for attaching it to the cantilevered portion of the actuator.
